# EUROPEAN PATENT APPLICATION

(11) **EP 4 116 747 A1**
(43) Date of publication of application: **11.01.2023**
(21) Application number: 21184622.5
(22) Date of filing: 08.07.2021
(51) Int. Cl.: G02B 6/02

(54) **OPTICAL FIBER**

(71) Applicant: NKT Photonics A/S, 3460 Birkerød (DK)
(72) Inventor: MICHIELETTO, Mattia, 3460 Birkerød (DK); PEDERSEN, Martin Erland Vestergaard, 3450 Allerød (DK)
(74) Representative: Zacco Denmark A/S

(57) **Abstract**

An optical fiber for guiding an optical signal, said optical fiber having a longitudinal, optical axis (A) and a cross section perpendicular thereto, said optical fiber comprises:
a core region (2) being capable of guiding an optical signal in a fundamental core mode with an effective refractive index, n_{c}, at an optical signal wavelength, λ₁;
a cladding region surrounding the core region, the cladding region comprising an inner cladding region (3) and an outer cladding region (6), said inner cladding region comprising a background material having a refractive index, n_{b}, and a plurality of inner cladding features arranged in said background material, wherein at least a plurality of said plurality of inner cladding features are of a first type of feature (4), said first type of feature comprising an air hole surrounded by a high-index region comprising a high-index material having a refractive index, nᵣ, that is larger than the refractive index of the inner cladding background material, said first type of feature supports an optical mode with an effective refractive index, n₁, which is lower than or equal to the effective refractive index of the fundamental core mode, n_{c}, at said optical signal wavelength, λ₁,
wherein at least a plurality of said plurality of inner cladding features are of a second type of feature (5) comprising an air hole in direct contact with the background material having a refractive index, n_{b}, and
wherein said inner cladding features are arranged in a substantially hexagonal lattice and the six nearest neighbors surrounding a first type of feature are of said second type of feature, and
wherein no first type of feature is surrounded by less than six nearest neighbors of the second type of feature.

## Description

The present disclosure relates to an optical fiber for guiding an optical signal.

US 8 903 214 B2 describes a large core area optical fiber for guiding an optical signal. The optical fiber has a longitudinal, optical axis and a cross section perpendicular thereto, and comprises a core region which is capable of guiding an optical signal in a fundamental core mode with an effective refractive index, n_{c}, at an optical signal wavelength, λ₁. The fiber has a cladding region surrounding the core region. The cladding region comprises an inner cladding region and an outer cladding region. The inner cladding region comprises a background material having a refractive index, n_{b}, and a plurality of inner cladding features arranged in said background material. At least a plurality of said plurality of inner cladding features are of a first type of feature. The first type of feature comprises an air hole surrounded by a high-index region comprising a high-index material having a refractive index, nᵣ, that is larger than the refractive index of the inner cladding background material, and the first type of feature supports an optical mode with an effective refractive index, n₁ , which is lower than or equal to the effective refractive index of the fundamental core mode, n_{c}, at said optical signal wavelength, λ₁.
The core region has a maximum cross-sectional dimension of more than about 40 µm, and the index difference between the high-index material and the background material of the inner cladding is below about 1.10⁻².

It is an object of the present invention to provide an improved optical fiber, in particular an optical fiber which has, inter alia, a better modal performance.

The object is satisfied by an optical fiber in accordance with any one of the independent claims 1 and 10. Preferred embodiments of the present invention are described in the dependent claims.

At least in some aspects, the invention relates to an optical fiber for guiding an optical signal, said optical fiber having a longitudinal, optical axis and a cross section perpendicular thereto, said optical fiber comprising:
a core region being capable of guiding an optical signal in a fundamental core mode with an effective refractive index, n_{c}, at an optical signal wavelength, λ₁ ;
a cladding region surrounding the core region, the cladding region comprising an inner cladding region and an outer cladding region, said inner cladding region comprising a background material having a refractive index, n_{b}, and a plurality of inner cladding features arranged in said background material, wherein at least a plurality of said plurality of inner cladding features are of a first type of feature, said first type of feature comprising an air hole surrounded by a high-index region comprising a high-index material having a refractive index, nᵣ, that is larger than the refractive index of the inner cladding background material, said first type of feature supports an optical mode with an effective refractive index, n₁, which is lower than or equal to the effective refractive index of the fundamental core mode, n_{c}, at said optical signal wavelength, λ₁,
wherein at least a plurality of said plurality of inner cladding features are of a second type of feature comprising an air hole, which is preferably in direct contact with the background material having a refractive index, n_{b}, and
wherein said inner cladding features are arranged in a substantially hexagonal lattice and the six nearest neighbors surrounding a first type of feature are of said second type of feature, and
wherein no first type of feature is surrounded by less than six nearest neighbors of the second type of feature.

At least in some aspects, the invention relates to an optical fiber for guiding an optical signal, said optical fiber having a longitudinal, optical axis and a cross section perpendicular thereto, said optical fiber comprising:
a core region being capable of guiding an optical signal in a fundamental core mode with an effective refractive index, n_{c}, at an optical signal wavelength, λ₁ ;
a cladding region surrounding the core region, the cladding region comprising an inner cladding region and an outer cladding region, said inner cladding region comprising a background material having a refractive index, n_{b}, and a plurality of inner cladding features arranged in said background material, wherein at least a plurality of said plurality of inner cladding features are of a first type of feature, said first type of feature comprising an air hole surrounded by a high-index region comprising a high-index material having a refractive index, nᵣ, that is larger than the refractive index of the inner cladding background material, said first type of feature supports an optical mode with an effective refractive index, n₁, which is lower than or equal to the effective refractive index of the fundamental core mode, n_{c}, at said optical signal wavelength, λ₁,
wherein at least a plurality of said plurality of inner cladding features are of a second type of feature comprising an air hole, where the second type of feature does not support an optical mode with an effective refractive index, n₁, and wherein said inner cladding features are arranged in a substantially hexagonal lattice and the six nearest neighbors surrounding a first type of feature are of said second type of feature, and
wherein no first type of feature is surrounded by less than six nearest neighbors of the second type of feature.

In some embodiments, the second type of feature comprises an air hole in direct contact with the background material having a refractive index, n_{b}.

In the optical fiber, inner cladding features of the first type of feature are always surrounded by six nearest neighbors. Specifically, inner cladding features of the first type of feature that are located in a radial outer area of the arrangement of the first and second type of features and that are not surrounded by six inner cladding features of the second type can be avoided. Such inner cladding features of the first type of feature can be regarded as "corner resonators" and are not present in the optical fiber. It has been found that such corner resonators have a tendency to go off-wavelength compared to the inner cladding features of the first type of feature that are surrounded by six nearest neighbors of the second type of feature. This can be due to imperfections in the structure and variations in the material index, and it can also be due to the fact that the "corner resonators" have less than six nearest neighbors of inner cladding features of the second type. As the corner resonators are not present in the optical fiber, the unit cell around each first type of feature is identical. Thus, the behaviour of the inner cladding features that are first type of features is identical and they behave at least similar or preferably identical. This in turn enables a better modal performance with a larger bandwidth of single-mode operation for the optical fiber. Furthermore, the yield can be increased when using such fibers in rod modules. Moreover, the fabrication yield can be increased when not having corner resonators in the fibers.

At least in some embodiments, in a radially outer layer of inner cladding features centered around the core no first type of inner cladding features are present, such that, when viewed radially, all inner cladding features of the first type of feature are arranged radially inward of the radially outermost layer. Thus, all inner cladding features of the first type of feature are arranged radially inward of the outermost inner cladding features of the second type. Thus, so-called corner resonators of the first type of feature are not present. Thereby, a better modal performance with a larger bandwidth of operation for the optical fiber can be achieved.

At least in some embodiments, in a radially inner layer of inner cladding features centered around the core no first type of inner cladding features are present, such that, when viewed radially, all inner cladding features of the first type of feature are arranged radially outward of the radially innermost layer. The innermost layer of inner cladding features around the core therefore only included inner cladding features of the second type, while all inner cladding features of the first type are arranged radially outward of the innermost inner cladding features of the second type.

At least in some embodiments, all the inner cladding features of the first type of feature have identical mode properties. A better modal performance and a larger bandwidth of single-mode operation can thereby be obtained.

At least in some embodiments, the high-index regions of all first type of features are doped in the same way. All first type of features therefore have similar or even identical properties, which helps to improve the performance of the optical fiber.

At least in some embodiments, the plurality of inner cladding features of the first type of feature are divided into at least a first group and a second group, wherein the first group has a different modal dispersion than the second group. The modal properties of the fiber can thereby be adjusted at least to some extent.

It is possible to calculate numerically properties of the fiber, for example, in dependence on the design and properties of the inner cladding features, such as their arrangement in a hexagonal structure and form and doping level of the first type of features. Thereby, it is for example possible via a numerical simulation to determine corresponding parameters, such as lattice constants and doping levels, to produce the real fiber.

At least in some embodiments, the first group is configured to delocalize higher order core modes, in particular the LP₁₁-modes, in a first wavelength region, wherein the second group is configured to delocalize higher order core modes, in particular the LP₁₁-modes, in a higher second wavelength region, and wherein the first and second wavelength regions are adjacent or partially overlapping to each other. The modal performance of the fiber can thus be enhance and a larger bandwidth of single-mode operation can be obtained.

At least in some embodiments, the first group includes first type of features with high-index regions that are doped differently than the high-index regions of the first type of features of the second group. The required doping levels of the first type of features of the first and second group can be determined by a numerical calculation or simulation, so that a fiber with desired overlapping first and second wavelength regions can be designed.

At least in some embodiments, the size of a doping area in the high index regions and/or the doping level in the high index regions of the first type of features differs between the first and second group. Thereby, a different modal dispersion for the two groups can also be obtained.

At least in some aspects, the invention relates to an optical fiber for guiding an optical signal, said optical fiber having a longitudinal, optical axis and a cross section perpendicular thereto, said optical fiber comprising:
a core region being capable of guiding an optical signal in a fundamental core mode with an effective refractive index, n_{c}, at an optical signal wavelength, λ₁ ;
a cladding region surrounding the core region, the cladding region comprising an inner cladding region and an outer cladding region, said inner cladding region comprising a background material having a refractive index, n_{b}, and a plurality of inner cladding features arranged in said background material, wherein at least a plurality of said plurality of inner cladding features are of a first type of feature, said first type of feature comprising an air hole surrounded by a high-index region comprising a high-index material having a refractive index, nᵣ, that is larger than the refractive index of the inner cladding background material, said first type of feature supports an optical mode with an effective refractive index, n₁, which is lower than or equal to the effective refractive index of the fundamental core mode, n_{c}, at said optical signal wavelength, λ₁,
wherein at least a plurality of said plurality of inner cladding features are of a second type of feature comprising an air hole in direct contact with the background material having a refractive index, n_{b}, and
wherein said inner cladding features are arranged in a substantially hexagonal lattice and the six nearest neighbors surrounding a first type of feature are of said second type of feature, and
wherein the cladding region further includes a set of first type of features whereof each first type of feature of the set is surrounded by less than six nearest neighbors of the second type of feature, and
wherein each first type of feature of the set is designed to support at least approximately the optical mode with the effective refractive index, n₁.

The set of first type of feature can be regarded as "corner resonators". They are designed differently than the "normal" first type of features that are surrounded by six nearest neighbours of the second type of feature. Specifically, the corner resonators are designed such that they support the optical mode with the effective refractive index, n₁ at an optical signal wavelength, λ₁. Thus, they can provide the same modal properties as the other first type of features and therefore act as if they were surrounded by six nearest neighbours of the second type of feature. They also can be designed to have the effective refractive index, n₁, at the optical signal wavelength, λ₁. but dispersion can be different.

At least in some embodiments, the set of first type of feature is located in a radially outermost layer of inner cladding features centered around the core, such that, when viewed radially, all the first type of feature surrounded by six nearest neighbors of said second type of feature are arranged radially inward of the radially outermost layer.

At least in some embodiments, the optical fiber is a single-mode optical fiber.

At least in some embodiments, the core region has a core effective refractive index, the core effective refractive index being substantially equal to the refractive index of the inner cladding background material.

At least in some embodiments, the core region comprises a material doped with at least one active element. The optical fiber has several applications, such as for amplification of an optical signal. The amplification of an optical signal propagating in the core region may be due to the presence of an active element, which transfers energy from the pump light to the signal light. The active element may comprise a rare earth element selected from the group of Ytterbium (Yb), Erbium (Er), Praseodymium (Pr), Neodynium (Nd), Holmium (Ho), Thulium (Tm), Dysprosium (Dy), or combinations thereof, such as a combination of Erbium (Er) and Ytterbium (Yb).

The material doped with an active element may be arranged in different ways in the core region. In one embodiment, the active material is substantially homogenously distributed over the core region. The active part may at least partly be comprised within said core region and/or within said inner cladding region. In one embodiment, the active region comprises an annular shaped region. The annular shaped region may comprise a coherent ring surrounding the centre of said core region.

In some embodiments, the concentration of the active element may gradually change over the core region cross section. The concentration may also be such that there is a substantially higher concentration in e.g. a circular or annular formed part of the core region and a smaller concentration in another part or the core region. In that case, the phrase "the active part" of the core region may refer to the part of the core region wherein the concentration is highest.

At least in some embodiments, the refractive index of the active features may be influenced by the presence of the active element(s). By adding one or more additional dopants, the refractive index may be adjusted. In some embodiments, the active features have a refractive index profile below or substantially equal to the refractive index of said inner cladding background material.

At least in some embodiments, the material doped with an active element is substantially arranged in an active part of said core region wherein said active part is arranged so that the fundamental core mode has a modal field overlap with the active part, which is above about 50%, or above about 60%, or above about 70%, or above about 80%. In some embodiments, the overlap can be between 50% and 80%, preferably between 50% and 60% or between 50% and 70%.

At least in some embodiments, said core region is doped with one or more materials selected from the group of Fluorine (F), Germanium (Ge), Boron (B), Thorium (Th), Chlorine (CI), Bromine (Br), Iodine (I), and Cerium (Ce), or combinations of these.

At least in some embodiments, a diameter, d₁, of said air hole of said first type of feature is such that the d₁/Λ ratio is below about 0.3 or below about 0.2. The ratio can be between 0.02 and 0.2, preferably between 0.08 and 0.15.

At least in some embodiments, high-index region of said first type of feature comprises germanium doped silica. Any other suitable element can also be used to dope silica.

At least in some embodiments, the core region has a maximum cross-sectional dimension of more than about 40 µm.

At least in some embodiments, the core region corresponds to a number of cells in the lattice, the number being any number between 7 and 37, such as 7, 19, or 37.

In some embodiments, for a fiber having an Ytterbium (Yb) doped core and a high index region of said first type of feature which comprises Germanium (Ge) as a dopant, the pitch of such a fiber can be between 10 µm and 20 µm, preferably between 14 µm and 16 µm, the diameter of the air holes can be between 0.5 µm to 3 µm, and the thickness of the high index region can be between 1 µm and 5 µm.

In some embodiments, for a fiber having a Thulium (Tm) doped core and a high index region of said first type of feature which comprises Germanium (Ge) as a dopant, the pitch of such a fiber can be between 20 µm and 40 µm, preferably between 25 µm and 33 µm, the diameter of the air holes can be between 1 µm to 6 µm, and the thickness of the high index region can be between 2 µm and 10 µm.

At least in some embodiments, the index difference between the high-index material and the background material of the inner cladding is below about 1.10⁻².

The disclosure of US 8 903 214 B2 is herein in its entirety incorporated by reference.

Preferred embodiments of the present invention will now be described by way of example only and with reference to the accompanying drawings in which:
- Fig. 1: shows a cross-sectional view of an optical fiber as described in US 8 903 214 B2;
- Fig. 2: shows a cross-sectional view of a variant of an optical fiber in accordance with the present invention;
- Fig. 3: shows a cross-sectional view of a further variant of an optical fiber in accordance with the present invention;
- Figs. 4a, b: show graphs of the ratio between light in the fiber core and total light over wavelength for a fiber (Fig. 4a) not covered by the present invention and a fiber (Fig. 4b) covered by the present invention; and
- Figs. 5a, b: show an effective index over wavelength for a fiber (Fig. 5a) not covered by the present invention and a fiber (Fig. 5b) covered by the present invention.

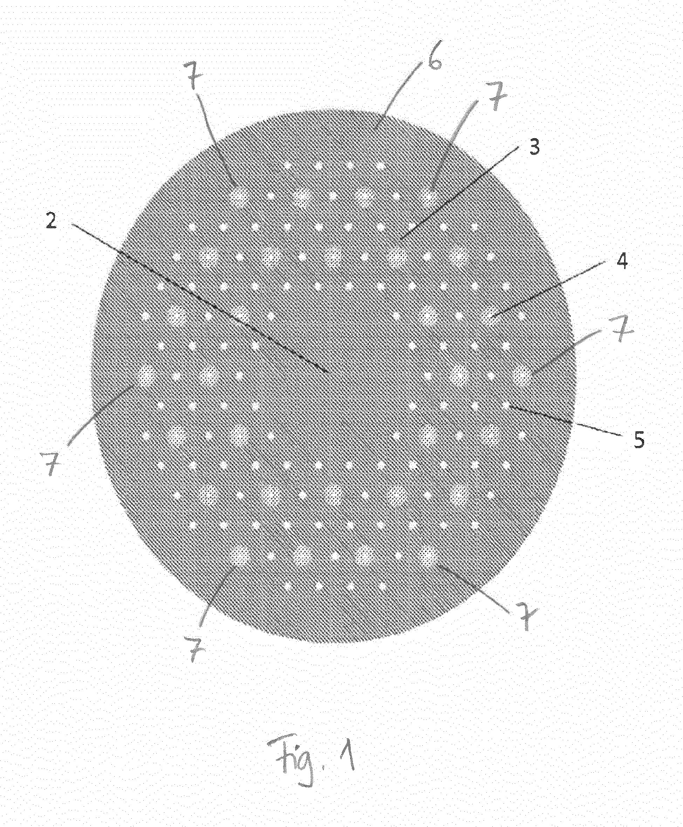

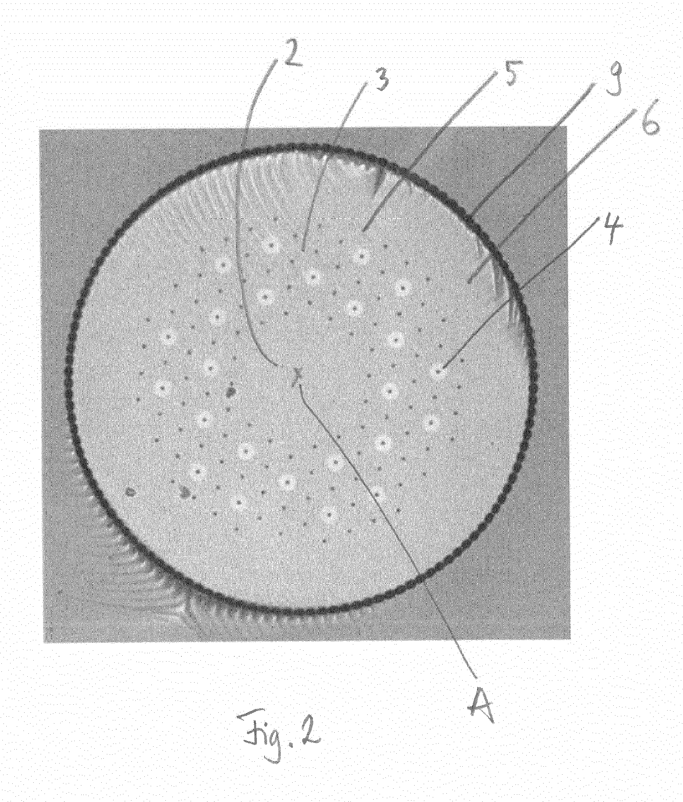

Fig.1 corresponds to Fig. 2 of US 8 903 214 B2 and shows a design of an optical fiber which has a core 2, an inner cladding region 3 surrounding the core 2, and an outer cladding region 6 surrounding the inner cladding region 3.

All inner cladding features are arranged in the inner cladding region 3. A part of inner cladding features are of a first type of feature 4 and a part are of a second type of feature 5. The inner cladding features are arranged in a hexagonal lattice and the nearest neighbour of all first type of feature 4 are inner cladding features of the second type of feature 5.

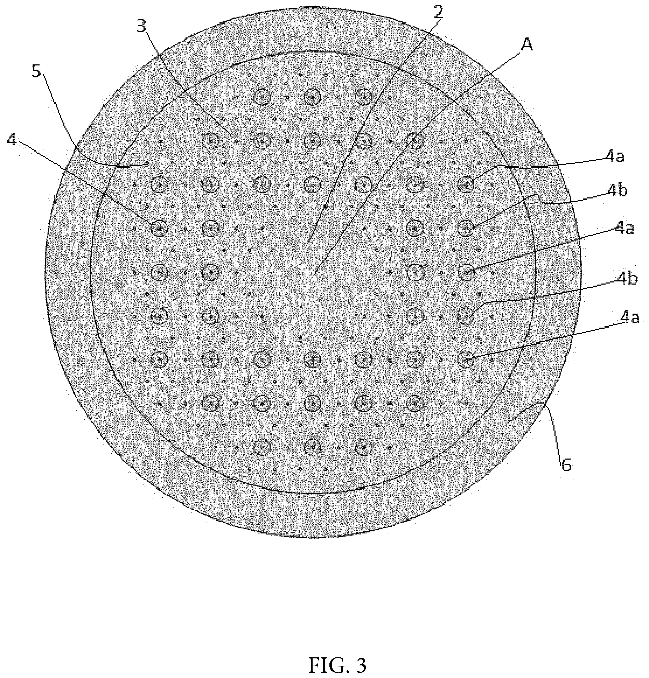

The core region 2 corresponds to 19 cells in the hexagonal lattice (see also in Fig. 3). The number of 19 is only a specific example and other numbers of cells are possible.

The arrangement of the first type of feature 4 defines a honeycomb-like or kagome lattice. Each of the first type of feature 4 comprises an air hole (center part) surrounded by a high-index region (surrounding part) which is formed substantially as a cylindrical structure having a ring formed cross sectional area.

The second type of feature 5 is made of an air hole surrounded by the inner cladding material. In some embodiment, the pitch of the hexagonal lattice is 14.5 µm and the thickness of the high-index region is approximately 4 µm, and the air hole diameter of the first and second type of feature is approximately 2 µm.

The fiber as shown in Fig. 1 comprises at the radially outer region of the inner cladding 3 inner cladding features of the first type of feature 3 that are not surrounded by 6 nearest neighbours of the second type of feature 5, in contrast to the inner cladding features of the first type of feature 3 that are arranged radially inside the outermost circumferential row or layer of inner cladding features of the second type of feature 5. Such inner cladding features of the first type of feature 4 that are not surrounded by 6 nearest neighbours of the second type of feature 5 are called corner resonators 7.

The corner resonators 7 can have a tendency to go off-wavelength compared to the inner cladding features of the first type of feature 4 that are surrounded by six nearest neighbors of the second type of feature 5, and the corner resonators 7 can in particular decrease the modal performance of the optical fiber.

The optical fiber of Fig. 2 does not have such corner resonators 7. Furthermore, in the example of Fig. 2, the outer cladding region 6 comprises an air cladding 9 and the fiber can optionally further comprise a polymer cladding surrounding the outer cladding region 6 (not shown).

Thus, Fig. 2 shows a cross sectional view of an optical fiber for guiding an optical signal, which has a longitudinal, optical axis A and a cross section perpendicular thereto. The fiber comprises a core region 2 being capable of guiding an optical signal in a fundamental core mode with an effective refractive index, n_{c}, at an optical signal wavelength, λ₁. The fiber has a cladding region surrounding the core region 2. The cladding region comprises an inner cladding region 3 and an outer cladding region 6. The inner cladding region 3 comprises a background material having a refractive index, n_{b}, and a plurality of inner cladding features 4, 5 arranged in said background material. A plurality of the plurality of inner cladding features are of a first type of feature 4 which comprise an air hole surrounded by a high-index region comprising a high-index material having a refractive index, nᵣ, that is larger than the refractive index of the inner cladding background material. The first type of feature 4 supports an optical mode with an effective refractive index, n₁, which is lower than or equal to the effective refractive index of the fundamental core mode, n_{c}, at said optical signal wavelength, λ₁. At least a plurality of the plurality of inner cladding features are of a second type of feature 5 comprising an air hole in direct contact with the background material having a refractive index, n_{b}. The inner cladding features 4,5 are arranged in a substantially hexagonal lattice and the six nearest neighbours surrounding a first type of feature 4 are of said second type of feature 5. Since there are no corner resonators 7 as in the fiber of Fig. 1, in the fiber of Fig. 2 no first type of feature 4 is surrounded by less than six nearest neighbours of the second type of feature 5.

Therefore, in the optical fiber of Fig. 2, inner cladding features of the first type of feature 4 are always surrounded by six nearest neighbours which are inner cladding features of the second type of features 5. As the corner resonators 7 (see Fig. 1) are not present in the optical fiber of Fig. 2, the unit cell around each first type of feature 4 is identical. Thus, the behaviour of the first type of feature 4 is identical or at least very similar. This in turn enables a better modal performance with a larger bandwidth for operation of the optical fiber.

The fiber of Fig. 3 differs from the fiber of Fig. 2 in that the inner cladding features of the first type of feature 4 are arranged in a rectangular arrangement. However, as in Fig. 2, the inner cladding features 4, 5 are arranged in a substantially hexagonal lattice and the six nearest neighbours surrounding a first type of feature 4 are of the second type of feature 5. No first type of feature 4 is surrounded by less than six nearest neighbours of the second type of feature 5.

The fiber of Fig. 3 does not have an air cladding, in contrast to the fiber of Fig. 2, see air cladding 9.

For the moment it is assumed that the groups of first type of features 4a, 4b shown in Fig. 3 have the same properties.

In the fibers of Figs. 2 and 3, in a radially outer circumferential layer or row of inner cladding features centered around the fiber core 2 no first type of inner cladding feature 4 is present, such that, when viewed radially, all inner cladding features of the first type of feature 4 are arranged radially inward of the radially outer layer which only includes second type of inner cladding features 5. Correspondingly, in a radially inner layer or row of inner cladding features circumferentially centered around the core 2, no inner cladding features of the first type of feature 4 are present, such that, when viewed radially, all inner cladding features of the first type of feature 4 are arranged radially outward of the radially innermost layer or row of inner cladding features of the second type 5.

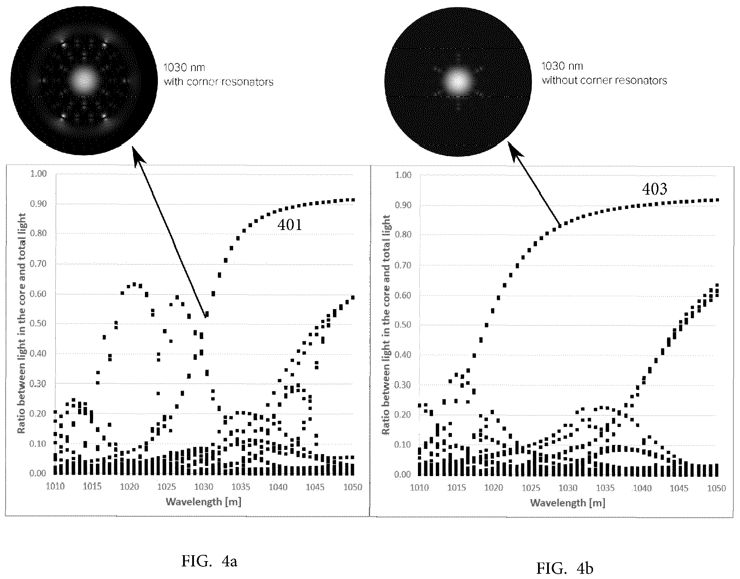

Fig. 4a shows a calculated diagram of the ratio between light in the fiber core and total light for fiber modes propagating in the fiber in dependence on the wavelength in nanometer (nm) for a fiber, such as a fiber designed in accordance with Fig. 1, which is not covered by the present invention. Fig. 4b shows a calculated diagram of the ratio between light in the fiber core and total light for fiber modes propagating in the fiber in dependence on the wavelength in nanometer (nm) for a fiber, such as a fiber designed according to Figs. 2 or 3, which is covered by the present invention. The optical modes are unspecified in Figs. 4a and b. Each dot indicates a ratio for an unspecified mode at a certain wavelength.

As can be seen in Fig. 4a, in a wavelength range between about 1032 nm and 1038 nm, the fiber of Fig. 4a shows in essence a single-mode behaviour as only one fiber mode, which is usually the LPoi-mode, has a high ratio for the light in the core with respect to the total light, see curve 401 in Fig. 4a. As an example, the high ratio can be defined to be above 0.7, whereas all other modes have a ratio below 0.25 in the mentioned wavelength range. The optical modes with a low ratio couple far better out of the core into the cladding of the fiber and dissipate.

The fiber can be said to show single-mode behaviour in a wavelength range in which only one mode has a high ratio for the light in the core with respect to the total light, whereas all other modes have a low ratio in the same wavelength region. The high ratio can be set to be above 0.7. The low ratio can be set to be below 0.25.

The curve 403 as shown in Fig. 4b shows a smoother behaviour than curve 401, indicating that a fiber in accordance with Fig. 2 or Fig. 3 has an improved modal behaviour. Further, the single mode behaviour is extended below 1032 nm down to about 1023 nm. The optical signal wavelength, λ₁, can be in the middle of the wavelength range where single mode-behaviour occurs, for example at around 1030 nm in Fig. 4b.

In the fibers according to Figs. 2 and 3, all of the inner cladding features of the first type of feature 4 preferably have identical modal properties. The high-index regions of all first type of features 4 can be doped in the same way when the fiber is produced. The high-index regions are depicted by the outer rings encircling an inner circle, which is an air hole of the first type of features 4 in Figs. 2 and 3.

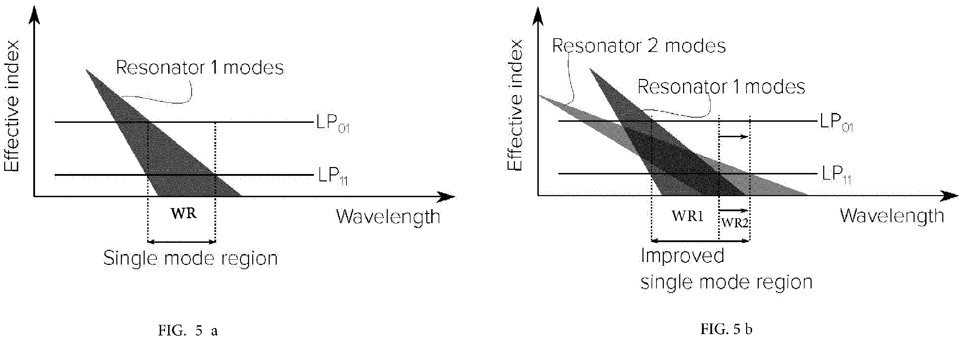

Fig. 5a shows the effective index over wavelength for a fiber as shown in Fig. 2 or 3. It can be seen that the fiber shows a single-mode behaviour in a wavelength region WR. The effective index of the LP₁₁-mode is lower than the effective index of the LP₀₁ mode.

In some embodiments, the plurality of inner cladding features of the first type of feature 4 is divided into at least a first group of first type of features 4a and a second group of first type of features 4b. This is indicated as an example in Fig. 3, where the first type of features in essence alternate between being a first type of feature of the first group 4a and the second group 4b.

The first type of features of the first group 4a are designed to have a different modal dispersion than the ones of the second group 4b. For example, the first type of features of the first group 4a are configured to delocalize higher order core modes, in particular the LP₁₁-modes, in a first wavelength region WR1 (see Fig. 5b), and the first type of features of the second group 4b are configured to delocalize higher order core modes, in particular the LP₁₁-modes, in a higher second wavelength region WR2, which is adjacent to or partially overlapping with the first wavelength region WR1.

The first type of features of the first group 4a can include first type of features with high-index regions that are doped differently than the high-index regions of the first type of features of the second group 4b. The size of a doping area in the high index regions and/or the doping level in the high index regions of the first type of features can also differ between the first group 4a and the second group 4b. The required doping levels and/or the size of the doping area can be determined numerically prior to producing the fiber. The fiber can then be produced such that it shows a behaviour as depicted in Fig. 5b.

Referring back to the fiber of Fig. 1, the corner resonators 7 can be regarded as first type of features of a set of first type of features that are surrounded by less than six nearest neighbours of the second type of feature 5. Each of the first type of features of the set, i.e. the corner resonators 7, can be designed to support at least approximately an optical mode with the effective refractive index, n1, at an optical signal wavelength, λ₁, that is also supported by the "proper" first type of features that are surrounded by six nearest neighbours of the second type of feature 5. Thereby, a behaviour as shown in Figs. 4b and 5a, b can be obtained by properly choosing, for example, the doping level of the corner resonators 7 in view of the doping level of the "proper" first type of features.

In some embodiments, and as shown in Fig. 1, the set of first type of feature (see the location of the corner resonators 7) is located in a radially outermost layer of inner cladding features centered around the core 2. Thus, when viewed radially, all of the first type of feature 4 surrounded by six nearest neighbours of said second type of feature 5 are arranged radially inward of the radially outermost layer.

### Reference signs

- 2: core
- 3: inner cladding region
- 4: first type of feature
- 4a: first type of feature of first group
- 4b: first type of feature of second group
- 5: second type of feature
- 6: outer cladding region
- 7: corner resonator
- 9: air cladding
- 401: curve
- 403: curve
- A: optical axis
- WR: wavelength region
- WR1: first wavelength region
- WR2: second wavelength region

## Claims

1. An optical fiber for guiding an optical signal, said optical fiber having a longitudinal, optical axis (A) and a cross section perpendicular thereto, said optical fiber comprising:
a core region (2) being capable of guiding an optical signal in a fundamental core mode with an effective refractive index, n_{c}, at an optical signal wavelength, λ₁;
a cladding region surrounding the core region, the cladding region comprising an inner cladding region (3) and an outer cladding region (6), said inner cladding region comprising a background material having a refractive index, n_{b}, and a plurality of inner cladding features arranged in said background material, wherein at least a plurality of said plurality of inner cladding features are of a first type of feature (4), said first type of feature comprising an air hole surrounded by a high-index region comprising a high-index material having a refractive index, nᵣ, that is larger than the refractive index of the inner cladding background material, said first type of feature supports an optical mode with an effective refractive index, n₁, which is lower than or equal to the effective refractive index of the fundamental core mode, n_{c}, at said optical signal wavelength, λ₁,
wherein at least a plurality of said plurality of inner cladding features are of a second type of feature (5) comprising an air hole in direct contact with the background material having a refractive index, n_{b}, and
wherein said inner cladding features are arranged in a substantially hexagonal lattice and the six nearest neighbors surrounding a first type of feature are of said second type of feature, and
wherein no first type of feature is surrounded by less than six nearest neighbors of the second type of feature.

2. The optical fiber in accordance with claim 1,
where in a radially outer layer of inner cladding features (4, 5) centered around the core no first type of feature (4) is present, such that, when viewed radially, all inner cladding features of the first type of feature (4) are arranged radially inward of the radially outermost layer of inner cladding features (4, 5).

3. The optical fiber in accordance with claim 1 or 2,
where in a radially inner layer of inner cladding features (4, 5) centered around the core no first type of feature (4) is present, such that, when viewed radially, all inner cladding features of the first type of feature (4) are arranged radially outward of the radially innermost layer of inner cladding features (4, 5).

4. The optical fiber in accordance with any one of the preceding claims,
wherein all of the inner cladding features of the first type of feature (4) have identical mode properties.

5. The optical fiber in accordance with any one of the preceding claims,
wherein the high-index regions of all first type of features (4) are doped in the same way.

6. The optical fiber in accordance with any one of the claims 1 to 3,
wherein the plurality of inner cladding features of the first type of feature (4) are divided into at least a first group (4a) and a second group (4b), wherein the first group has a different modal dispersion than the second group.

7. The optical fiber in accordance with claim 6,
wherein the first group (4a) is configured to delocalize higher order core modes, in particular the LP₁₁-modes, in a first wavelength region (WR1),
wherein the second group (4b) is configured to delocalize higher order core modes, in particular the LP₁₁-modes, in a higher second wavelength region (WR2), and
wherein the first and second wavelength regions are adjacent or partially overlapping to each other.

8. The optical fiber in accordance with claim 6 or 7,
wherein the first group (4a) includes first type of features with high-index regions that are doped differently than the high-index regions of the first type of features of the second group (4b).

9. The optical fiber in accordance with claim 6, 7 or 8,
wherein the size of a doping area in the high index regions and/or the doping level in the high index regions of the first type of feature (4) differs between the first group (4a) and the second group (4b).

10. A optical fiber for guiding an optical signal, said optical fiber having a longitudinal, optical axis and a cross section perpendicular thereto, said optical fiber comprising:
a core region (2) being capable of guiding an optical signal in a fundamental core mode with an effective refractive index, nc, at an optical signal wavelength, λ₁;
a cladding region surrounding the core region, the cladding region comprising an inner cladding region (3) and an outer cladding region (6), said inner cladding region comprising a background material having a refractive index, n_{b}, and a plurality of inner cladding features arranged in said background material, wherein at least a plurality of said plurality of inner cladding features are of a first type of feature (4), said first type of feature comprising an air hole surrounded by a high-index region comprising a high-index material having a refractive index, nᵣ, that is larger than the refractive index of the inner cladding background material, said first type of feature supports an optical mode with an effective refractive index, n₁, which is lower than or equal to the effective refractive index of the fundamental core mode, nc, at said optical signal wavelength, λ₁,
wherein at least a plurality of said plurality of inner cladding features are of a second type of feature (5) comprising an air hole in direct contact with the background material having a refractive index, n_{b}, and
wherein said inner cladding features are arranged in a substantially hexagonal lattice and the six nearest neighbors surrounding a first type of feature are of said second type of feature, and
wherein the cladding region further includes a set of first type of features (7) whereof each first type of feature of the set is surrounded by less than six nearest neighbors of the second type of feature, and
wherein each first type of feature of the set is designed to support at least approximately the optical mode with the effective refractive index, n₁, at an optical signal wavelength, λ₁.

11. The optical fiber of claim 10,
wherein the set of first type of feature (7) is located in a radially outermost layer of inner cladding features centered around the core, such that, when viewed radially, all of the first type of feature (4) surrounded by six nearest neighbors of said second type of feature (5) are arranged radially inward of the radially outermost layer.
